# FASCICULE DE BREVET EUROPEEN

(11) **EP 0 420 737 B1**
(45) Date de publication et mention de la délivrance du brevet: **16.03.1994**
(21) Numéro de dépôt: 90402631.7
(22) Date de dépôt: 25.09.1990
(51) Int. Cl.: F16D 23/12, F16D 27/00

(54) **Timonerie de transmission de forces pour véhicules automobiles**
Gestänge zur Kraftübertragung für Kraftfahrzeuge
Transmission control linkwork for motor vehicles

(30) Priorité: 29.09.1989 FR 8912748
(43) Date de publication de la demande: 03.04.1991
(73) Titulaire: VALEO, 75848 Paris Cédex 17 (FR)
(72) Inventeur: Focqueur, Hervé, F-95130 Franconville (FR); Jumel, Bernard, F-75014 Paris (FR)
(74) Mandataire: Gamonal, Didier

(56) Documents cités:
- EP-A- 0 092 950
- FR-A- 2 594 758
- FR-A- 2 611 614
- FR-A- 2 616 501
- GB-A- 2 124 321

## Description

La présente invention concerne les timoneries de transmission de forces pour véhicules automobiles propres à assurer une liaison entre un organe de commande et un organe de manoeuvre d'un dispositif débrayeur d'un embrayage, du genre comportant une partie mécanique.

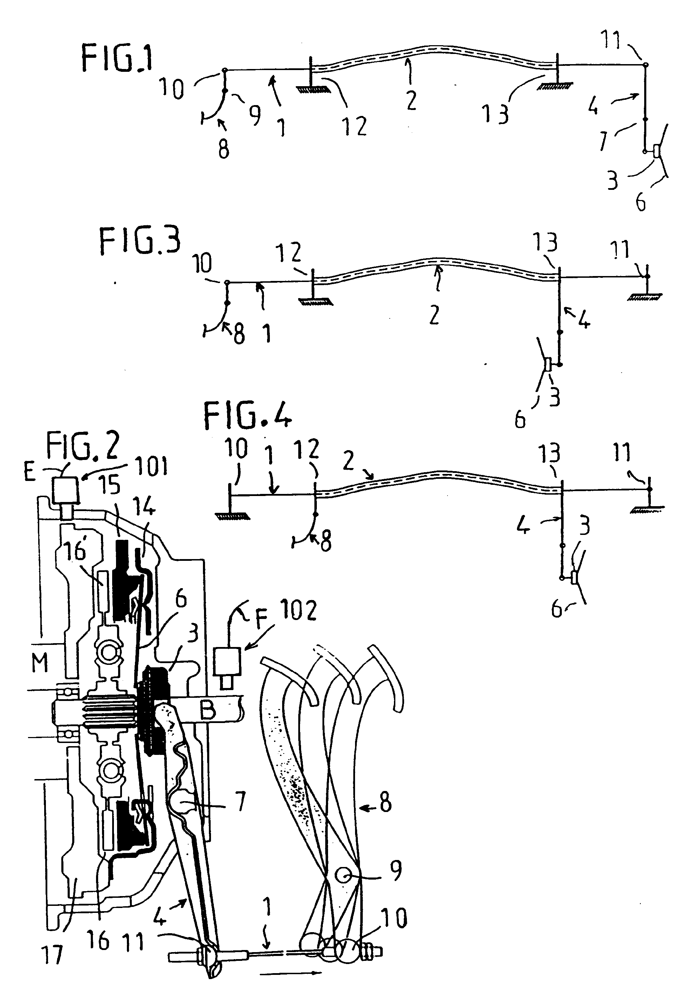

Usuellement (figures 1 et 2), la timonerie est dotée d'un câble 1 mobile axialement, d'une gaine 2 entourant ledit câble, et d'une fourchette 4 montée pivotante autour d'un point d'articulation 7, telle qu'une rotule solidaire d'une partie fixe du véhicule (figure 2) ou un axe tourillonnant et porté par une partie fixe du véhicule.

En variante le point d'articulation peut consister en des paliers, la fourchette portant alors des tétons tourillonnants dans lesdits paliers implantés, par exemple, dans le carter de la boîte de vitesses.

D'une manière générale le point d'articulation 7 constitue un point de guidage pour la timonerie.

L'organe de manoeuvre est une butée de débrayage 3 soumise à l'action d'une fourchette de débrayage 4 propre à agir sur le dispositif débrayeur d'un embrayage tel que les extrémités des doigts d'un diaphragme 6 ou des leviers de débrayage.

L'organe de commande 8 est le plus souvent une pédale montée pivotante autour d'un point d'articulation 9 solidaire également d'une partie fixe du véhicule.

Le câble 1 est accroché à chacune de ses extrémités 10 et 11 à des points d'accrochage appartenant respectivement à la pédale 8 et à la fourchette 4, tandis que la gaine 2 est interposée entre deux points fixes 12 et 13 solidaires du véhicule.

Les points d'articulation ainsi que les points fixes constituent des points dénommés ci-après "points d'appui" pour la timonerie, qui peut comporter une partie hydraulique, par exemple entre la fourchette 4 et la butée 3. Ces points d'appui ont comme caractéristique d'être portés par une partie fixe du véhicule en étant solidaires de ladite partie ou montés tourillonnants par rapport à celle-ci.

Bien entendu, la présence de la fourchette 4 n'est pas obligatoire, le point 11 pouvant être attelé à un disque, comme décrit dans le brevet FR-A-1 587 732 ou un organe menant, comme décrit dans le document EP-A-0 322 265.

A la figure 1, en appuyant sur la pédale 8 on tire sur le câble 1, guidé par la gaine 2, pour manoeuvrer la fourchette 4.

Bien entendu, figure 3, le point 11 peut être fixe, tandis que le point 13 peut être mobile en étant attelé à la fourchette 4, une variation de position du point 10 entraînant une variation de position du point 13.

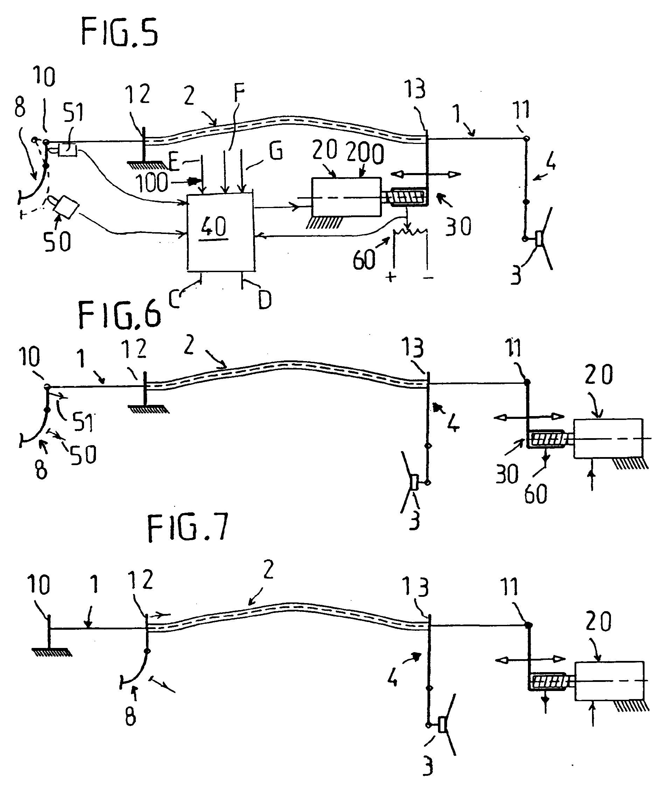

En variante (figure 4) les points 10 et 11 peuvent être fixes et les points 12 et 13 mobiles en étant attelés respectivement à la pédale 8 et à la fourchette 4, le câble 1 servant de guide à la gaine 2, qui est alors mobile axialement.

Dans tous les cas l'un des éléments gaine-câble constitue un élément de transmission de force, tandis que l'autre élément câble-gaine constitue un élément de guidage.

En variante, la timonerie peut comporter un élément de transmission de forces en plusieurs parties avec des tringles avec un système de renvoi et au moins un point d'articulation porté par une partie fixe du véhicule, ledit point d'articulation constituant un point de guidage pour la timonerie.

En pratique, la course de l'organe de commande 8 et de manoeuvre 3 se décompose en une course morte, en une course de modulation avec glissement et en une course finale pour un bon accouplement.

Par exemple (figure 2), dans le cas d'un embrayage classique à disque de friction 16, la course morte se produit entre la position de débrayage, disque de friction libéré, et une position intermédiaire, dite position d'accostage, dans laquelle les garnitures de friction 16' du disque 16 viennent lécher le plateau de pression 15.

La course de modulation se produit avec un glissement circonférentiel desdites garnitures 16' entre le plateau de réaction 17 et le plateau de pression 15 de l'embrayage et avec une transmission de couple de plus en plus complète jusqu'à une position d'accouplement complet, dit de couplage. La course finale permet un bon accouplement entre l'arbre menant M solidaire en rotation du moteur du véhicule et l'arbre mené B (l'arbre d'entrée de la boîte de vitesses).

Ainsi, la course de modulation est utile pour le confort du passager et pour les manoeuvres du véhicule, tandis que la course morte est nécessaire compte tenu des tolérances de fabrication des divers composants de l'embrayage ainsi que des voilages, et notamment de la mise en cône du plateau de pression 15 sous l'effet des sollicitations thermiques dont il est l'objet.

Pour mémoire, on signalera que le plateau de pression 15 est solidaire en rotation d'un couvercle 14 en étant mobile axialement par rapport à celui-ci. Ledit couvercle 14 est propre à être rapporté sur le plateau de réaction 17, tandis que le diaphragme 6 s'appuie sur le couvercle 14 pour action sur le plateau de pression 15 et sollicitation de celui-ci en direction du plateau de réaction 17 pour serrage des garnitures de friction 16' entre lesdits plateaux 15 et 17. Le plateau 17 est solidaire de l'arbre menant M et le disque 16 est solidaire en rotation de l'arbre mené secondaire B.

Dans le document GB-A-2 124 321 on a déjà proposé une disposition comportant des moyens moteurs manoeuvrant automatiquement l'embrayage par l'intermédiaire d'une transmission agissant sur l'organe de commande. Un agencement est prévu pour tenir compte de l'usure des garnitures de friction. Ce dispositif, dépourvu de pédale de débrayage, n'est pas prévu pour permettre un glissement contrôlé des garnitures de friction afin d'écrêter les oscillations du moteur à combustion interne.

On a déjà proposé, dans le document FR-A- 2 616 501 (US-A-4 890 711), une disposition avec des moyens d'actionnement dotés de moyens moteurs et d'une transmission irréversible propre à agir sur l'organe de commande pour faire patiner l'embrayage en réponse à des moyens de pilotage comportant un calculateur et des moyens de détection.

Ce dispositif sans pédale permet notamment d'écrêter les oscillations du moteur à combustion interne au bénéfice du confort de l'usager.

Cette disposition permet donc de moduler la course finale et de modulation à l'aide des moyens moteurs mais ne permet pas au conducteur d'effectuer la course de modulation et nécessite de profondes modifications.

Dans le document FR-A-2 594 758 on a décrit une timonerie de transmission comportant des moyens moteurs et une partie mécanique. Un calculateur est prévu pour piloter la mise en route des moyens moteurs en fonction d'une information provenant d'un détecteur de contrainte dans l'élément de transmission de force.

Ainsi l'action de l'utilisateur sur l'élément de transmission de force est accompagnée par les moyens moteurs. Cet élément de transmission de force comporte une partie terminale avec une vis sans fin appartenant à une transmission agissant entre l'élément de transmission de force et les moyens moteurs.

Avec un tel agencement il n'est donc pas possible de faire patiner l'embrayage automatiquement.

Dans le document FR-A-2 611 614, selon le préambule de la revendication 1, on a prévu une disposition comportant également des moyens moteurs et, pour actionner lesdits moyens moteurs, des moyens de pilotage avec un calculateur et des moyens de détection d'au moins un paramètre de fonctionnement de la transmission pour permettre une commande de régulation du patinage.

Ce dispositif comporte une pédale d'embrayage appartenant à un dispositif d'actionnement de secours intervenant indépendamment en cas de panne des moyens moteurs. En fonctionnement normal les moyens moteurs interviennent.

Normalement le conducteur n'effectue donc pas la course finale, ainsi que la course de modulation.

La présente invention a pour objet une nouvelle timonerie, qui, de manière simple et économique, tout en comportant une partie mécanique, permet une modulation de la course finale et/ou de modulation tout en ayant la possibilité pour le conducteur d'effectuer la course de modulation et en permettant de faire patiner l'embrayage en réponse à des moyens de pilotage.

Le problème est, selon l'invention, résolu par la partie caractéristique de la revendication 1.

Grâce à l'invention, il est possible de moduler le serrage et le desserrage des garnitures de friction entre les plateaux de pression et de réaction de l'embrayage à l'aide des moyens moteurs sans que le conducteur n'ait à intervenir sur l'organe de commande.

Un glissement contrôlé des garnitures de friction avec modulation de la course finale et/ou de modulation est ainsi rendu possible, ledit glissement permettant d'écrêter notamment les surcouples instantanés du moteur, ce qui améliore la durée de vie des organes de transmission, diminue les bruits et limite les à-coups au bénéfice du confort de l'usager.

En outre cette disposition permet de minimiser les fautes de conduite du conducteur, grâce à la disposition selon l'invention permettant de prendre le relais du conducteur, par exemple une manoeuvre d'embrayage trop brusque se traduisant par un patinage de l'embrayage et évitant au conducteur d'être projeté en direction du pare-brise.

On appréciera que les moyens de commande sont simplifiés par rapport à ceux du susmentionné document FR-A-2 616 501, que de manière simple et économique un maximum de pièces d'une timonerie à organe de commande et organe de manoeuvre classiques est conservé.

En outre de manière simple la timonerie selon l'invention peut se monter en place et lieu d'une timonerie classique.

De préférence c'est le point d'appui associé à l'élément de guidage que l'on déplace directement ou indirectement ou en variante un point d'articulation et de guidage.

Les moyens de détection détectant au moins un paramètre de fonctionnement de la tansmission du véhicule automobile allant du moteur aux roues de celui-ci, peuvent comporter des capteurs détectant la vitesse de rotation du moteur et de l'arbre mené, ce qui permet selon une cartographie pré-établie à l'avance, de faire patiner l'embrayage dans certaines plages pour diminuer les bruits.

Les moyens de détection peuvent également comporter un capteur détectant un paramètre lié à l'accélération du véhicule.

Il peut s'agir d'un capteur repérant les variations de position du papillon du carburateur, ou en variante d'un accéléromètre.

Grâce à ceux-ci en faisant patiner l'embrayage on évite que se produisent des phénomènes de balancement nuisibles au confort de l'usager.

De préférence les moyens de détection comportent les deux types de capteurs précités.

On appréciera que le point mobile que l'on déplace directement ou indirectement est un point porté par une partie fixe du véhicule et formant point de réaction pour l'élément de guidage ou en variante un point de guidage.

Suivant une autre caractéristique les moyens d'actionnement irréversibles permettent avantageusement d'effectuer également la course morte.

Pour cela il suffit d'associer au moins un capteur de position d'actionnement à l'organe de commande, le calculateur recevant les informations dudit capteur de position pour commander lesdits moyens moteurs, de sorte que par enfoncement ou relâchement de l'organe de commande par le conducteur et donc action de l'organe de commande sur son capteur de position associé, le calculateur pilote la mise en route des moyens moteurs pour déplacement dudit point d'appui mobile d'une de ses positions limites à l'autre dans un premier sens ou dans un deuxième sens suivant l'action exerçée par le conducteur sur l'organe de commande, jusqu'à une position de fin de course par exemple détectée par un capteur de position associé au point d'appui mobile ou déterminée par un calculateur programmé en conséquence.

Grâce aux moyens de commande irréversibles lorsque le conducteur actionne manuellement l'organe de commande, ledit point d'appui reste fixe.

On appréciera que l'invention permet de résoudre, à course sensiblement constante de l'organe de commande, deux exigences contradictoires, à savoir une augmentation de la course de modulation, sans diminution de la course morte et sans passer par un dispositif hydraulique.

Suivant une autre caractéristique, la course définie de l'organe mobile peut être évolutive et il peut être adjoint à la timonerie un capteur d'usure détectant une traction supplémentaire d'usure dans la gaine ou le câble, de sorte qu'il est possible d'effectuer un rattrapage d'usure en déplaçant le point d'appui mobile jusqu'à un effort résiduel nul dans la timonerie, l'organe de commande étant alors en position libre.

Les caractéristiques et avantages de l'invention ressortiront de la description qui va suivre, à titre d'exemple, en référence aux dessins annexés dans lesquels:
- la figure 1 est une vue schématique d'une timonerie de l'Art Antérieur pour une première variante de réalisation;
- la figure 2 est une vue schématique d'un embrayage à friction associé à la timonerie de la figure 1;
- les figures 3 et 4 sont des vues analogues à la figure 1 pour d'autres variantes de réalisation;
- la figure 5 est une vue schématique de la timonerie, analogue à la figure 1, pour un premier exemple de réalisation selon l'invention;
- les figures 6 à 10 sont des vues analogues à la figure 5 pour d'autres variantes de réalisation, sans représentation du calculateur pour les figures 6 à 9;
- la figure 11 est une vue de face des moyens moteurs avec leur transmission irréversible associée pour un premier mode de réalisation;
- la figure 12 est une vue en coupe selon la ligne 1-1 de la figure 11, le moteur électrique n'étant pas coupé;
- les figures 13 et 14 sont des vues analogues aux figures 11 et 12 pour un second mode de réalisation, la figure 14 étant une vue en coupe selon la ligne 2-2 de la figure 13.

Dans les figures 5 à 14, les éléments identiques à ceux décrits en référence aux figures 1 à 4 de l'Art Antérieur seront affectés du même signe de référence, les points d'appui étant des points portés par une partie fixe du véhicule automobile à moteur à combustion interne.

En se reportant à la figure 5, on voit que la timonerie, selon l'invention, comporte un point d'appui 13 directement mobile dans les deux sens suivant une course définie entre deux positions limites et sous l'action de moyens de commande irréversibles 200 comportant des moyens moteurs 20 et une transmission 30 intervenant entre lesdits moyens moteurs 20 et le point d'appui mobile 13. Des capteurs de position d'actionnement 50,60 sont associés respectivement à l'organe de commande 8 et au point d'appui mobile 13. Un calculateur électronique 40 est prévu, ledit calculateur recevant les informations desdits capteurs de position 50,60 pour commander lesdits moyens moteurs 20. Par enfoncement ou relâchement de l'organe de commande 8 par le conducteur et donc action de l'organe de commande 8 sur son capteur de position d'actionnement associé 50, le calculateur 40 pilote la mise en route des moyens moteurs 20 pour déplacement du point d'appui mobile d'une de ses positions limites à l'autre dans un premier sens ou dans un deuxième sens suivant l'action exerçée par le conducteur sur l'organe de commande 8, jusqu'à une position de fin de course. Cette position est détectée par le capteur de position 60 associé au point d'appui mobile 13. Sous l'action de l'organe de commande 8 actionné manuellement par le conducteur, lorsque le capteur de position 50 associé audit organe 8 n'émet pas de signal capable, par l'intermédiaire du calculateur 40, d'engendrer la mise en route des moyens moteurs 20, le point d'appui mobile 13 reste fixe par l'intermédiaire des moyens de commande irréversibles 30.

La présence du capteur associé au point mobile n'est pas indispensable. En effet, le calculateur peut être programmé afin de générer un signal de consigne de position pour les moyens moteurs en réponse à un signal de commande produit par le capteur associé à l'organe de commande, en sorte de déplacer le point mobile d'une de ses positions limites à l'autre.

Par exemple, les moyens moteur peuvent consister en un moteur électrique à commande pas-à-pas, déplacé d'une position extrème, correspondant à l'une des positons limites du point mobile, à une autre position extrème, correspondant à l'autre position limite du point mobile, par un nombre déterminé d'impulsions de largeur prédeterminée générées par le calculateur en réponse au signal de commande du capteur associé à l'organe de commande.

La mémorisation des positions extrèmes, grâce à un capteur d'usure décrit ci-après, tient compte alors des usures, notamment des garnitures de friction, les impulsions étant évolutives en fonction des usures.

Dans tous les cas, une course du point mobile entraîne une course de l'organe de manoeuvre.

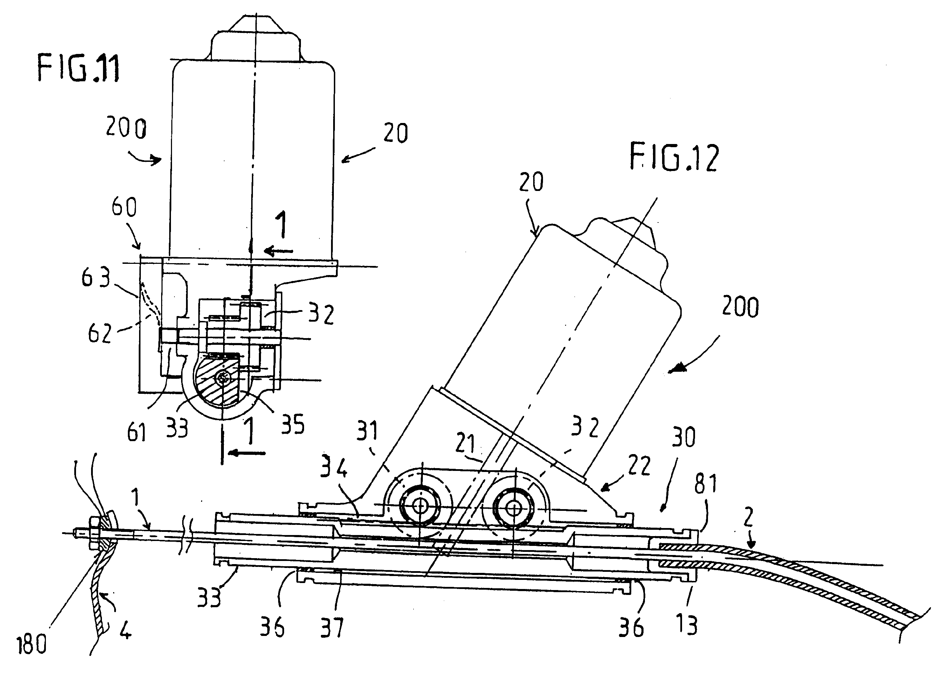

Plus précisément, à la figure 5, comme dans les figures 11 à 14 décrites ci-après c'est la transmission 30 qui est irréversible et c'est le point d'appui 13 associé à l'une des extrémités de la gaine 2 de guidage qui est mobile, le capteur de position d'actionnement 50 étant un switch détectant la position de fin de course de la pédale, tandis que le capteur 60 associé au point d'appui mobile 13 est un potentiomètre dont le point milieu est relié au calculateur 40. Ce calculateur 40 a des entrées C et D pour son alimentation et reçoit des signaux E,F,G provenant de capteurs (voir figure 2 pour les signaux E,F) appartenant à des moyens de détection 100 détectant au moins un paramètre de fonctionnement de la transmission du véhicule allant du moteur aux roues et ici mesurant ou détectant respectivement la vitesse de rotation du plateau de réaction 17 et donc de l'arbre menant M, la vitesse de rotation de l'arbre mené secondaire B, et un paramètre lié à l'accélération du véhicule, telle que la position du papillon du carburateur ou de la pédale d'accélérateur. Ce calculateur 40 reçoit les signaux provenant des capteurs 50 et 60.

Suivant une caractéristique importante de l'invention ce calculateur 40 reçoit également un signal provenant d'un capteur de position libre 51 associé à l'organe de commande 8 et détectant la position libre dudit organe de commande 8, lorsque celui-ci n'est pas actionné par le conducteur.

Suivant l'invention des moyens de détection 100 sont prévus, de sorte que pour ladite position libre de l'organe de commande 8, le capteur de position libre 51 envoie un signal au calculateur 40, lequel sous l'influence de moyens de détection 100 détectant au moins un paramètre de fonctionnement de la transmission du véhicule allant du moteur aux roues, actionne lesdits moyens moteurs 20 pour faire patiner l'embrayage.

Ainsi qu'on l'aura compris le calculateur 40 et les moyens de détection 100 appartiennent à des moyens de pilotage, et les moyens moteurs 20 et leur transmission irréversible 30 associée appartiennent à des moyens d'actionnement 200 propres à agir sur l'organe de commande 8 pour faire patiner l'embrayage (et donc glisser les garnitures de friction 16′ du disque 16 entre les plateaux de pression et de réaction) en réponse aux moyens de pilotage.

Les moyens de détection 100 peuvent comporter des capteurs 101,102 mesurant la vitesse de rotation du plateau de réaction 17 et la vitesse de rotation de l'arbre B et/ou des capteurs détectant un paramètre lié à l'accélération du véhicule, telle qu'une prise d'information liée à la position du papillon du carburateur, ou un accéléromètre.

Ici les moyens de détection 100 comportent les deux types de capteurs précités.

A la figure 5, le capteur de position libre 51 est un switch ou un interrupteur permettant de détecter la position libre de la pédale 8 et les moyens de détection 100 comportent les capteurs 101,102 émettant les signaux E,F, ainsi qu'un capteur émettant le signal G et détectant la position du papillon du carburateur, cette prise d'information étant préférable car elle permet d'anticiper les accélérations.

Ainsi, lorsque le conducteur actionne manuellement la pédale 8, tant que le switch 50 n'est pas actionné par la pédale 8, une modulation du couple d'embrayage est possible manuellement, le disque de friction 16 passant alors progressivement de l'état engagé (garnitures 16' serrées entre les plateaux 15,17) à l'état libéré et vice-versa.

Lorsque le conducteur enfonce complètement la pédale de débrayage 8, laquelle actionne alors le switch 50, le calculateur 40 reçoit une information du capteur 50 et pilote la mise en route des moyens moteurs 20, lesquels entraînent un déplacement du point d'appui mobile 13 dans un premier sens jusqu'à une première position extrême (ou limite) détectée par le potentiomètre 60, pour effectuer la course morte de l'embrayage dans un premier sens. Ce potentiomètre répère de préférence la position d'un palpeur (figure 5) porté par la transmission des moyens de commande 200

Lorsque le conducteur relâche alors son action sur la pédale, celle-ci remonte et le switch 50 retourne dans sa position initiale, ce qui est pris en compte par le calculateur 40 pour actionner les moyens moteurs en sens inverse et effectuer une course en sens inverse du point mobile 13, jusqu'à une deuxième position extrême (ou limite) détectée par le potentiomètre 60. Par exemple la transmission 30 (figure 5) peut porter un palpeur entrainé par l'arbre de sortie des moyens moteurs, ledit palpeur consistant en un curseur coopérant avec le potentiomètre 60. Ledit palpeur est adapté à arrêter les moyens moteurs 20 lorsqu'il atteint l'une des bornes du potentiomètre 60, comme décrit dans le document FR-A-2530757.

Le point d'appui 13 est mobile ainsi dans les deux sens suivant une course définie entre deux positions extrêmes limites déterminées par le potentiomètre 60 ou en variante par le calculateur électronique 40.

Lorsque la pédale est en position relevée ou libre, le capteur 51 envoie une information au calculateur 40, lequel entraîne la mise en route des moyens moteurs 20 lorsque, par son entrée G associée à un capteur détectant une accélération du véhicule tel qu'un capteur repérant la position du papillon du carburateur ou un accéléromètre,il détecte par exemple des variations d'accélération importantes, afin de desserrer et faire patiner lesdites garnitures 16′ de l'embrayage pour, notamment, un bon confort de l'usager. Grâce aux capteurs 101,102 et aux signaux E et F il devient possible, selon une cartographie pré-établie, de faire glisser lesdites garnitures 16′ de l'embrayage dans une plage déterminée pour réduire les bruits. D'une manière générale, en détectant certains paramètres de fonctionnement de la transmission, on peut faire patiner l'embrayage.

Plus précisément la cartographie pré-établie tient compte d'essais effectués sur les véhicules, lesdits essais ayant permis de mettre en évidence l'apparition de bruits dits le plus souvent bruits "de trash" pour certains régimes du moteur et de la boîte de vitesses.

A la figure 6, c'est le point extrême 11 du câble 1 de guidage qui est mobile, et il en est de même à la figure 7 contrairement au mode de réalisation des figures 3 et 4.

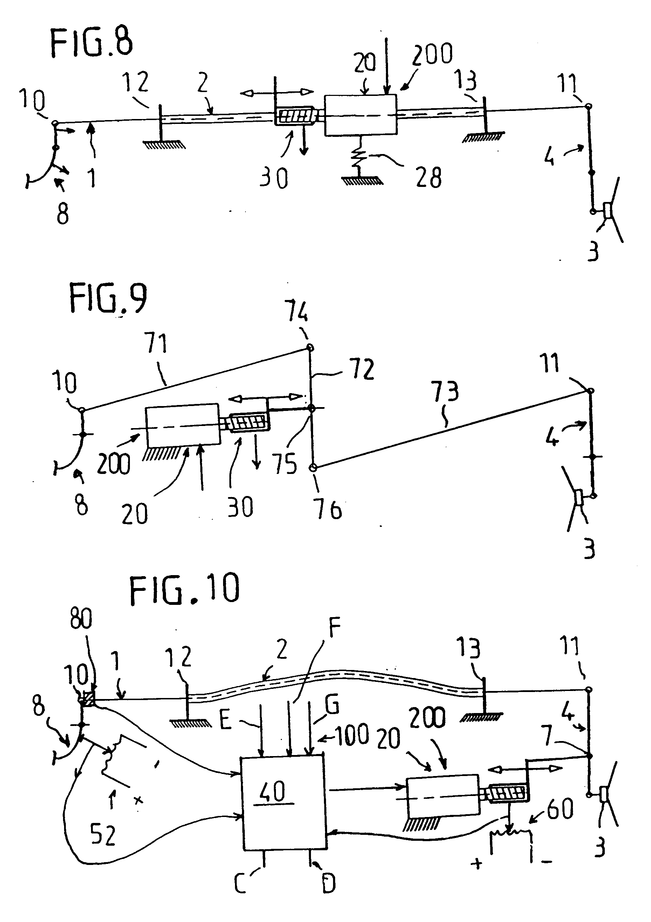

A la figure 8, la gaine 2 de guidage est coupée en deux entre les deux points d'appui fixes 12 et 13 et c'est ce point de coupure qui est mobile, sachant qu'une déformation de la gaine 2 entraîne une variation de position relative des points 10 et 11. Cette disposition revient à déplacer indirectement les points mobiles 12,13, car une mobilité du point de coupure entraîne de la même manière qu'à la figure 5 une variation des positions relatives des points 10,11, la seule différence étant que la gaine 2 de guidage est coupée.

Bien entendu le boîtier des moyens moteurs est relié élastiquement à une partie fixe du véhicule par un ressort 28, pour s'adapter aux variations de la gaine 2, ledit boîtier étant avantageusement commun à la transmission irréversible et aux moyens moteurs, en sorte que les moyens de commande sont monoblocs.

A la figure 9, la timonerie comporte des tringles 71,72,73 avec des points d'articulation 74,75,76 entre les extrémités 10 et 11 de la tringlerie, et c'est le point d'articulation 75, solidaire d'une partie fixe du véhicule et formant point de guidage pour la timonerie, qui est mobile. L'élément de transmission de force est donc en plusieurs parties (les tringles 71,72,73).

A la figure 10, c'est le point d'articulation 7 de la fourchette 4, formant également point de guidage pour la timonerie, qui est mobile.

On notera que dans cette figure les deux capteurs 50 et 51 ont été remplacés par un potentiomètre 52 qui détecte les positions libres et d'enfoncement de la pédale 8.

On appréciera qu'un capteur d'usure 80 est associé au câble 1, celui-ci détectant l'effort de traction sur le câble lorsque les garnitures de friction 16′ s'usent. Ce capteur 80, disposé dans la timonerie, détecte la présence ou non d'un effort dans la timonerie.

Au lieu d'utiliser une jauge de contrainte, de préférence on utilise un capteur comportant un switch soumis à l'action d'un ressort de rappel, ou en variante un bloc en élastomère portant des lames de contact, une traction sur le switch ou le bloc établissant des contacts.

Plus précisément, à la figure 10 ledit capteur 80 est disposé au niveau de la pédale 8, tandis que dans la réalisation des figures 11 et 12, on voit que ledit capteur 180 est interposé entre l'extrémité supérieure de la fourchette 4 et un écrou de fixation du câble 1. Bien entendu, il peut détecter un effort sur la gaine, en étant associé au point 12 ou 13.

Pour mémoire, on rappellera que lorsque les garnitures de friction 16′ s'usent, l'épaisseur de celles-ci varie de sorte que le diaphragme 6, monté dans l'exemple de la figure 2 de manière pivotante sur le couvercle 14, la butée 3 agissant en poussée, s'incline et déplace la butée 3 laquelle, par action sur la fourchette 4, tire indirectement sur le câble 1. Lorsque la pédale 8 est libre, un ressort rappelant usuellement la pédale 8 dans cette direction, c'est cette traction supplémentaire d'usure qui est détectée par le capteur 80, lequel envoie une information au calculateur 40, qui pilote la mise en route des moyens moteurs 20 jusqu'à obtention d'un effort résiduel nul. Le calculateur peut effectuer cette opération lors de situations programmées, par exemple mise en route ou arrêt du moteur du véhicule.

On notera qu'en position libre la pédale 8 n'est pas actionnée par le conducteur.

Dans ces figures 11 et 12, les moyens moteurs consistent en un moteur électrique et la transmission comporte des pignons intermédiaires 31,32 engrènant avec une vis sans fin 21 entraînée par le moteur électrique 20, comme décrit dans le document FR-A-2 372 998.

Cette vis sans fin comporte deux portions avec des pas de sens différent, chacune desdites portions engrènant avec l'un des pignons. Chaque pignon 31,32 est double et comporte une partie propre à engrener avec une crémaillère 34 ménagée dans un coulisseau 33.

Le moteur électrique 20 et la transmission irréversible 30, que constitue la vis sans fin 21 avec ses deux pignons 31,32 engrènant avec la crémaillère 34, sont logés dans un même boîtier 22, le coulisseau 33 étant mobile en translation et traversant un alésage 37 dudit boitier 22 avec intervention de bagues de guidage 36.

Le câble 1 passe à l'intérieur du coulisseau 33. Ce coulisseau présente, à l'une de ses extrémités axiales, une coupelle 81 épaulée ou embout à section globalement en forme de U avec des extrémités radiales formant épaulement pour appui sur le boîtier 22. Cette coupelle reçoit l'extrémité de la gaine 2 en étant solidaire, par exemple, par emmanchement à force du coulisseau 33. En variante, elle peut être d'un seul tenant avec le coulisseau.

On notera que le coulisseau 33 est doté d'un méplat 35 pour passage des pignons 31 et 32.

Le pignon 32 a son axe prolongé en 61 pour entraînement d'un bras 62, formant le curseur d'un potentiomètre 60 logé dans un boîtier 63 solidaire du boîtier 22. Ainsi, lorsque le moteur électrique 20 est entraîné, la vis sans fin tourne dans un sens et entraîne les pignons 31, 32 qui, à leur tour, déplacent la crémaillère 34 et donc la coupelle 81 et la gaine 2, jusqu'à ce que le bras 62 atteigne une position extrême. Un mouvement en sens inverse est alors possible à partir de cette position, jusqu'à ce que le bras 62 atteigne la deuxième position extrême du potentiomètre 60.

Dans ce mode de réalisation, c'est le point 13 qui est mobile.

On notera que lorsque la pédale 8 tire sur le câble, la gaine 2 ne peut être entraînée, du fait de l'irréversibilité de la transmission 30 et de la non-alimentation du moteur 20. Par contre, le coulisseau 33 peut se déplacer dans les deux sens par l'intermédiaire du moteur électrique 20.

Par déplacement du point mobile, on fait varier la courbure de la gaine 2, ce qui a pour effet de faire pivoter la fourchette 4 et de déplacer l'organe de manoeuvre 3, le potentiomètre 60 détectant la fin de course du point 13, ce qui a pour effet d'envoyer un signal au calculateur 40, lequel arrête le moteur électrique 20, celui-ci n'étant plus alors alimenté. Au réembrayage le potentiomètre permet, au point d'appui mobile 13, de retrouver sa position initiale pour permettre la course de modulation par le conducteur. Cette position de fin et de début de course est mémorisée par le calculateur 40 à chaque rattrapage d'usure pour déplacer de manière évolutive les positions limites du point mobile 13.

Lorsque le switch 51 ou le potentiomètre 52 détecte la position libre de la pédale 8, une information est envoyée au calculateur 40, lequel peut alors commander en fonction des informations qu'il reçoit des signaux E,F,G, les moyens moteurs 20 et les mettre en route pour déplacer le point mobile dans un sens ou dans l'autre et serrer ou desserrer l'embrayage pour obtenir un glissement contrôlé de celui-ci. On peut également utiliser une disposition du type de celle décrite dans la sus-mentionné document FR-A-2530757.

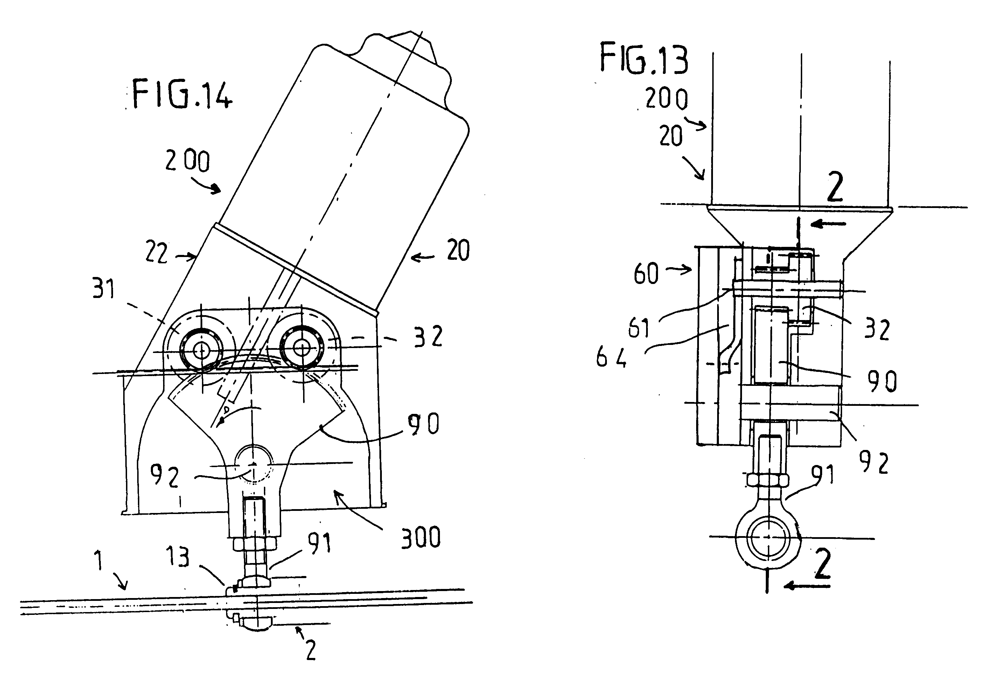

Dans les figures 13 et 14, les moyens moteurs 20 sont également électriques, mais la transmission 300 irréversible, au lieu de présenter une crémaillère 34 et un coulisseau 33, est dotée d'un secteur denté 90 engrènant avec les pignons 31,32 et montée autour d'un point d'articulation 92 solidaire du boîtier fixe 22.

Par rotation des pignons 31,32, le secteur 90 pivote, ce qui a pour effet de déplacer le point 13 rapporté par liaison du type à rotule 91 sur l'extrémité inférieure du secteur 90.

Ainsi qu'il ressort à l'évidence de la description, les moyens moteurs 20 et la transmission irréversible associée 30,300 forment des moyens de commande agissant sur la timonerie, tandis que le calculateur 40 et les différents capteurs 50,60 ; 51,52,80 forment des moyens de pilotage desdits moyens de commande.

Bien entendu, la présente invention n'est pas limitée aux exemples de réalisation décrits, mais englobe toutes variantes d'exécution, en particulier les moyens moteurs peuvent être du type hydraulique, le calculateur 40 pilotant alors une pompe électrique, laquelle fait varier la pression à l'intérieur d'une chambre définie par un cylindre et un piston à double effet, ce qui a pour effet de déplacer le piston, et donc un point mobile de la timonerie.

De même, la transmission irréversible peut comporter un moteur électrique doté d'une vis engrènant avec une démultiplication à engrenages dotée de pignons, l'un des pignons de l'engrenage comportant une rainure en spirale, dans laquelle pénètre un têton solidaire de l'une des extrémités d'un levier pivotant, dont l'autre extrémité comporte également un têton en prise avec le filetage d'une pièce mobile monté dans un alésage du boîtier.

Par rotation du moteur, on fait pivoter le levier, lequel entraîne ladite pièce mobile, portant l'un des points d'appui de la timonerie, par exemple l'une des extrémités de la gaine 2, ladite pièce étant traversée par le câble 1.

Les moyens moteurs en variante peuvent être irréversibles, grâce à la présence de champs magnétiques ou grâce à un frein associé par exemple à l'arbre de sortie du moteur.

Bien entendu, comme mentionné ci-dessus, la présence d'une fourchette n'est pas indispensable dans la timonerie, et celle-ci peut comporter une partie hydraulique.

Par exemple à la figure 9 le point 11 peut être lié à un disque monté tourillonnant sur une partie fixe du véhicule, ledit disque appartenant à un système bielle-manivelle entraînant une bielle attelée au piston d'un cylindre émetteur relié par une canalisation à un cylindre récepteur actionnant la fourchette de débrayage.

L'organe de commande peut être une manette ou poignée, par exemple pour motos à la disposition du conducteur.

Les points 10 et 12 peuvent être mobiles. Par exemple à la figure 5 il suffit de déplacer le point 12 au lieu du point 13 et à la figure 7 de déplacer le point 10 au lieu du point 11.

Le potentiomètre 60 peut être remplacé par deux switchs respectivement de début et de fin de course. Au lieu d'un potentiomètre, on peut utiliser une partie rotative entraînée par les moyens moteur pour ouvrir et fermer des contacts et arreter les moyens moteurs 20.

Le moteur électrique peut tourner dans un seul sens et son arbre de sortie ou axe 21 peut être relié mécaniquement par une démultiplication à engrenage irréversible, dotée de pignons, à un entraîneur coopérant avec un ergot transversal porté par un coulisseau, ledit entraîneur comportant deux saillies périphériques sensiblement en forme de section d'hélice, qui sont inclinées en sens inverse par rapport à l'axe 2 de l'entraîneur, lesdites saillies étant en outre décalées axialement et angulairement l'une par rapport à l'autre.

Bien entendu dans les figures 6 et 7 le capteur 80 peut détecter un effort supplémentaire sur la gaine en étant associé, soit au point 12, soit au point 13 et dans les figures 5,8 et 9, le capteur peut être associé au point 10 ou 11.

Bien que le capteur 80 peut détecter indirectement l'usure en étant associé à l'élément de guidage, de préférence ce capteur, pour une meilleure détection, est associé à l'élément de transmission de force.

Le rattrapage d'usure n'est pas forcément associé à la transmission irréversible 30,300.

Enfin, par exemple dans les figures 6 et 7 on peut rendre indirectement mobile le point 11 (ou le point 10) en coupant le câble 1 en deux et en déplaçant le point de coupure de manière analogue à la figure 8, étant entendu que dans tous les cas l'un seulement des éléments câble 1-gaine 2 est coupé.

Bien entendu le boîtier 22 est alors suspendu élastiquement comme celui de la figure 8.

Dans tous les cas on coupe l'élément de guidage, tandis que l'élément de transmission de force reste intact.

Enfin, pour des raisons de sécurité en cas de panne des moyens de commande, le conducteur peut effectuer une partie de la course morte dont la majeur partie est effectuée par les moyens de commande.

## Revendications

1. Timonerie de transmission de forces pour véhicules automobiles, propre à assurer une liaison entre un organe de commande (8) et un organe de manoeuvre (3) d'un dispositif débrayeur d'un embrayage, du genre comportant des moyens moteurs (20) une partie mécanique avec un élément de transmission de force en au moins une partie et des points d'appui (7,11,12,13,75) portés par une partie fixe du véhicule automobile et, pour actionner les moyens moteurs (20), des moyens de pilotage comportant un calculateur (40), dans laquelle l'organe de manoeuvre (3) est associé à un embrayage à friction comportant un disque de friction (16) avec des garnitures de friction (16') propres à être serrées entre le plateau de pression (15) et le plateau de réaction (17) que comporte ledit embrayage, caractérisée en ce que les moyens de pilotage comportent des moyens de détection (100) d'au moins un paramètre de fonctionnement de la transmission du véhicule automobile allant du moteur aux roues de celui-ci, tels que la vitesse de rotation de l'arbre menant et de l'arbre mené ou une accélération du véhicule automobile, en ce que l'un desdits points d'appui (7,11,12,13,75) de la timonerie est directement ou indirectement mobile dans les deux sens suivant une course définie entre deux positions limites et sous l'action de moyens de commande irréversibles (200,300) comportant les moyens moteurs (20) et une transmission (30,300) intervenant entre lesdits moyens moteurs (20) et ledit point d'appui mobile, en ce qu'un capteur de position libre (51,52) est associé à l'organe de commande (8) pour détecter sa position libre lorsque ledit organe de commande (8) n'est pas actionné par le conducteur, de sorte que pour ladite position libre de l'organe de commande (8), le capteur de position associé (51,52) envoie un signal au calculateur (40), lequel sous l'influence des signaux des moyens de détection (100) actionne lesdits moyens moteurs (20) pour faire patiner l'embrayage.

2. Timonerie selon la revendication 1, caractérisée en ce que les moyens de détection (100) comportent des capteurs (101,102) détectant la vitesse de rotation de l'arbre menant et de l'arbre mené du véhicule automobile, de sorte que pour ladite position libre de l'organe de commande (8), le capteur de position libre (51,52) envoie un signal au calculateur, lequel sous l'influence des signaux desdits capteurs de vitesse de rotation actionne lesdits moyens moteurs selon une cartographie pré-établie pour faire patiner l'embrayage.

3. Timonerie selon la revendication 1, caractérisée en ce que les moyens de détection (100) comportent un capteur détectant une accélération du véhicule automobile, de sorte que pour ladite position libre de l'organe de commande (8), le capteur de position libre (51,52) envoie un signal au calculateur, lequel sous l'influence du signal du capteur détectant une accélération du véhicule, actionne lesdits moyens moteurs (20) pour faire patiner l'embrayage.

4. Timonerie selon la revendication 3, caractérisée en ce que le capteur détectant une accélération du véhicule est un capteur repérant la position du papillon du carburateur.

5. Timonerie selon l'une quelconque des revendications 1 à 4, caractérisée en ce que au moins un capteur de position d'actionnement (50,52) est associé à l'organe de commande (8), en ce que ledit calculateur (40) reçoit les informations dudit capteur de position pour commander lesdits moyens moteurs (20), de sorte que par enfoncement ou relâchement de l'organe de commande (8) par le conducteur et action de l'organe de commande (8) sur son capteur de position associé (50,51,52), le calculateur (40) pilote la mise en route des moyens moteurs (20) pour déplacement dudit point d'appui mobile d'une de ses positions limites à l'autre dans un premier sens ou dans un deuxième sens suivant l'action exerçée par le conducteur sur l'organe de commande (8), et que ledit point d'appui mobile est fixe par l'intermédiaire des moyens de commande irréversibles (30,300) lorsque, d'une part, le conducteur actionne manuellement l'organe de commande (8), et d'autre part, ledit capteur de position associé audit organe de commande (8) n'émet pas de signal capable par l'intermédiaire du calculateur (40) d'engendrer la mise en route des moyens moteurs (20).

6. Timonerie selon l'une quelconque des revendications 1 à 5, caractérisée en ce qu'il est associé un capteur d'usure (80) pour détecter une traction supplémentaire d'usure dans la timonerie, lorsque l'organe de commande (8) est en position libre, de sorte que ledit capteur (80) envoie un signal au calculateur (40) lorsqu'une telle dite contrainte est présente, pour mettre en route lesdits moyens moteurs (20) et déplacer le point d'appui mobile, en sorte de réaliser un rattrapage d'usure.

7. Timonerie selon l'une quelconque des revendications précédentes, caractérisée en ce que le capteur de position (51,52) pour détecter la position libre de l'organe de commande (8) est un potentiomètre.

8. Timonerie selon l'une quelconque des revendications précédentes, caractérisée en ce que les moyens moteurs (20) comportent un moteur électrique avec une vis sans fin (21) engrenant avec des pignons (31,32) d'une transmission (30,300) irréversible.

9. Timonerie selon la revendication 8, caractérisée en ce que les pignons (31,32) engrènent avec une crémaillère (34) pratiquée dans un coulisseau (33) mobile axialement par rapport à un boîtier (22) à la faveur d'un alésage (37) que présente ledit boîtier (22).

10. Timonerie selon la revendication 8, caractérisée en ce que les pignons (31,32) engrènent avec un secteur denté (90) monté pivotant par rapport au boîtier.

11. Timonerie selon l'une quelconque des revendications précédentes, du genre comportant un câble (1) et une gaine (2), ledit câble ayant deux points d'extrémités (10,11) et traversant la gaine (2), caractérisée en ce que le point d'appui mobile (11) est le point d'extrémité du câble (1) opposé à celui associé à l'organe de commande (8).

12. Timonerie selon l'une quelconque des revendications précédentes, du genre comportant un câble (1) et une gaine (2) interposée entre deux points d'appui portés par une partie fixe du véhicule automobile, ledit câble (1) traversant ladite gaine (2), caractérisée en ce que le point d'appui mobile est l'un desdits points d'appui associé à l'extrémité de la gaine (2).

13. Timonerie selon l'une quelconque des revendications précédentes, caractérisée en ce que l'organe de commande est une pédale, et l'organe de manoeuvre une butée de débrayage (3) actionnée par une fourchette de débrayage (4).

## Patentansprüche

1. Gestänge zur Kraftübertragung für Kraftfahrzeuge, geeignet zur Gewährleistung einer Verbindung zwischen einem Bedienungsorgan (8) und einem Betätigungsorgan (3) für die Ausrückvorrichtung einer Kupplung, enthaltend Antriebsmittel (20), einen mechanischen Teil mit einem Kraftübertragungselement in wenigstens einem Teil und Auflagepunkten (7, 11, 12, 13, 75), die von einem feststehenden Teil am Kraftfahrzeug getragen werden, sowie zur Betätigung der Antriebsmittel (20) Regelmittel mit einem Rechner (40), wobei das Betätigungsorgan (3) einer Reibungskupplung zugeordnet ist, die eine Kupplungsscheibe (16) mit Reibbelägen (16') enthält, die zwischen der Druckplatte (15) und dem Schwungrad (17) der genannten Kupplung eingespannt werden können, **dadurch gekennzeichnet,** daß die Regelmittel auch Mittel zur Erfassung (100) wenigstens eines Betriebsparameters der Kraftübertragung des Kraftfahrzeugs vom Motor auf die Räder desselben enthalten, wie zum Beispiel der Umdrehungsgeschwindigkeit der Antriebswelle und der angetriebenen Welle oder eine Beschleunigung des Kraftfahrzeugs, daß einer der genannten Auflagepunkte (7, 11, 12, 13, 75) des Gestänges direkt oder indirekt in beiden Richtungen entsprechend einem Hub beweglich ist, der zwischen zwei Endpositionen begrenzt ist, und unter Einwirkung von nicht rückstellbaren Bedienungsmitteln (200, 300), enthaltend die Antriebsmittel (20) und eine Kraftübertragung (30, 300), die zwischen den genannten Antriebsmitteln (20) und dem genannten beweglichen Auflagepunkt wirksam wird, daß dem Bedienungsorgan (8) ein Freiweggeber (51, 52) zugeordnet ist, um die freie Stellung zu erfassen, wenn das genannte Bedienungsorgan (8) vom Fahrer nicht betätigt wurde, so daß für die genannte freie Stellung des Bedienungsorgans (8) der zugehörige Weggeber (51, 52) ein Signal an den Rechner (40) sendet, welches unter dem Einfluß der Signale der Erfassungsmittel (100) die genannten Antriebsmittel (20) betätigt, um die Kupplung rutschen zu lassen.

2. Gestänge nach Anspruch 1, **dadurch gekennzeichnet,** daß die Erfassungsmittel (100) Geber (101, 102) aufweisen, die die Umdrehungsgeschwindigkeit der Antriebswelle und der angetriebenen Welle des Kraftfahrzeugs erfassen, so daß der Freiweggeber (51, 52) für die genannte freie Stellung des Bedienungsorgans (8) an den Rechner ein Signal sendet, welches unter dem Einfluß der Signale der genannten Drehzahlgeber die genannten Antriebsmittel entsprechend einer vorher festgelegten Kartographie betätigt, um die Kupplung zum Rutschen zu bringen.

3. Gestänge nach Anspruch 1, **dadurch gekennzeichnet,** daß die Erfassungsmittel (100) einen Geber zur Erfassung einer Beschleunigung des Kraftfahrzeugs enthalten, so daß der Freiweggeber (51, 52) für die genannte freie Stellung des Bedienungsorgans (8) an den Rechner ein Signal sendet, welches unter dem Einfluß des Signals des Gebers zur Erfassung einer Fahrzeugbeschleunigung die genannten Antriebsmittel (20) betätigt, um die Kupplung zum Rutschen zu bringen.

4. Gestänge nach Anspruch 3, **dadurch gekennzeichnet,** daß der Geber zur Erfassung einer Beschleunigung des Fahrzeugs ein Geber ist, der die Stellung der Vergaser-Drosselklappe begrenzt.

5. Gestänge nach einem der Ansprüche 1 bis 4, **dadurch gekennzeichnet,** daß dem Bedienungsorgan (8) wenigstens ein Betätigungsweggeber (50, 52) zugeordnet ist, daß der genannte Rechner (40) die Informationen vom genannten Weggeber erhält, um die genannten Antriebsmittel (20) zu betätigen, so daß der Rechner (40) durch Betätigung und Loslassen des Bedienungsorgans (8) durch den Fahrer und Betätigung des Bedienungsorgans (8) am zugehörigen Weggeber (50, 51, 52) das Einschalten der Antriebsmittel (20) regelt, um den genannten beweglichen Auflagepunkt aus einer seiner Endstellung in die andere in einer ersten Richtung und in einer zweiten Richtung zu verschieben, je nachdem, wie der Fahrer das Bedienungsorgan (8) betätigt, und daß der genannte bewegliche Auflagepunkt mit Hilfe von irreversiblen Steuermitteln (30, 300) festgesetzt ist, wenn einerseits der Fahrer das Bedienungsorgan (8) von Hand betätigt und andererseits der genannte, dem Bedienungsorgan (8) zugeordnete Weggeber kein Signal aussendet, welches über den Rechner (40) das Einschalten der Antriebsmittel (20) bewirken könnte.

6. Gestänge nach einem der Ansprüche 1 bis 5, **dadurch gekennzeichnet,** daß diesem ein Verschleißgeber (80) zugeordnet ist, der eine zusätzliche Verschleißzugkraft im Gestänge erfaßt, wenn sich das Bedienungsorgan (8) in freier Stellung befindet, so daß der genannte Geber (80) an den Rechner (40) ein Signal sendet, wenn eine solche genannte Einschränkung vorliegt, um die genannten Antriebsmittel (20) in Gang zu setzen und den beweglichen Auflagepunkt so zu verschieben, daß ein Ausgleich des Verschleißes erfolgt.

7. Gestänge nach einem der vorherigen Ansprüche, **dadurch gekennzeichnet,** daß der Weggeber (51, 52) zur Erfassung der freien Stellung des Bedienungsorgans (8) ein Potentiometer ist.

8. Gestänge nach einem der vorherigen Ansprüche, **dadurch gekennzeichnet,** daß die Antriebsmittel (20) einen Elektromotor mit einer Schnecke (21) enthalten, die mit den Ritzeln (31, 32) einer irreversiblen Kraftübertragung (30, 300) in Eingriff steht.

9. Gestänge nach Anspruch 8, **dadurch** **gekennzeichnet,** daß die Ritzel (31, 32) mit einer Zahnstange (34) in Eingriff stehen, die in einem Gleitstück (33) vorgesehen ist, welches im Verhältnis zu einem Gehäuse (22) dank einer am genannten Gehäuse (22) vorhandenen Bohrung (37) in axialer Richtung beweglich ist.

10. Gestänge nach Anspruch 8, **dadurch gekennzeichnet,** daß die Ritzel (31, 32) mit einem Zahnsegment (90) in Eingriff stehen, welches im Verhältnis zum Gehäuse drehbar angebracht ist.

11. Gestänge nach einem der vorherigen Ansprüche, enthaltend ein Kabel (1) und einen Schlauch (2), wobei das genannte Kabel zwei Endpunkte (10, 11) besitzt und durch den Schlauch (2) verläuft, **dadurch gekennzeichnet,** daß der bewegliche Auflagepunkt (11) der Endpunkt des Kabels (1) ist, der dem Punkt gegenüberliegt, der dem Bedienungsorgan (8) zugeordnet ist.

12. Gestänge nach einem der vorherigen Ansprüche, enthaltend ein Kabel (1) und einen Schlauch (2), der zwischen zwei Auflagepunkten eingesetzt ist, welche auf einem feststehenden Teil des Kraftfahrzeugs ruhen, wobei das genannte Kabel (1) durch den Schlauch (2) hindurchtritt, **dadurch gekennzeichnet,** daß der bewegliche Auflagepunkt einer der genannten Auflagepunkte ist, die mit dem Ende des Schlauchs (2) verbunden sind.

13. Gestänge nach einem der vorherigen Ansprüche, **dadurch gekennzeichnet,** daß das Bedienungsorgan ein Pedal ist und daß es sich bei dem Betätigungsorgan um ein Kupplungsausrücklager (3) handelt, welches durch eine Ausrückgabel (4) betätigt wird.

## Claims

1. A force transmission linkage for motor vehicles, for coupling together a control member (8) and a manoeuvring member (3) of a declutching means for a clutch, and being of the kind comprising motor means (20), a mechanical part, having a force transmission element in at least one piece and application points (7, 11, 12, 13, 75) carried by a fixed part of the motor vehicle, and, for actuating the motor means (20), actuation means including a computer (40), wherein the manoeuvring member (3) is associated with a friction clutch comprising a friction disc (16) with friction liners (16') adapted to be gripped between the pressure plate (15) and the reaction plate (17) which form part of the said clutch, characterised in that the actuation means include detector means (100) for detecting at least one operating parameter of the transmission of the motor vehicle extending from the engine to the wheels of the latter, for example the speed of rotation of the driving shaft and driven shaft, or acceleration of the motor vehicle, in that one of the said application points (7, 11, 12, 13, 75) of the linkage is directly or indirectly movable in both directions along a path defined between two limiting positions, and under the action of irreversible control means (200, 300) comprising motor means (20) and a transmission (30, 300) acting between the said motor means (20) and the said movable application point, in that a free position sensor (51, 52) is associated with the control member (8) for detecting its free position when the said control member (8) is not actuated by the driver, so that for the said free position of the control member (8), the associated position sensor (51, 52) transmits a signal to the computer (40) which, in response to the signals from the detection means (100), actuates the said motor means (20) in such a way as to cause the clutch to slip.

2. A linkage according to Claim 1, characterised in that the detection means (100) include sensors (101, 102) detecting the speed of rotation of the driving shaft and of the driven shaft of the motor vehicle, in such a way that, for the said free position of the control member (8), the free position sensor (51, 52) transmits a signal to the computer, which in response to the signals from the said rotational speed sensors actuates the said motor means in accordance with a pre-established characteristic, so as to cause the clutch to slip.

3. A linkage according to Claim 1, characterised in that the detection means (100) include a sensor detecting acceleration of the motor vehicle, in such a way that, for the said free position of the control member (8), the free position sensor (51, 52) transmits a signal to the computer which, in response to the signal from the sensor detecting acceleration of the vehicle, actuates the said motor means (20) so as to cause the clutch to slip.

4. A linkage according to Claim 3, characterised in that the sensor which detects acceleration of the vehicle is a sensor of the position of the carburettor butterfly valve.

5. A linkage according to any one of Claims 1 to 4, characterised in that at least one actuation position sensor (50, 52) is associated with the control member (8), in that the said computer (40) receives information signals from the said position sensor so as to control the said motor means (20), in such a way that, when the driver pushes down or releases the control member (8), and by action of the control member (8) on its associated position sensor (50, 51, 52), the computer initiates starting of motor means (20) so as to displace the said movable application point from one of its limiting positions to the other in a first direction or in a second direction, in response to the force exerted by the driver on the control member (8), and so that the said movable application point is fixed by an irreversible control means (30, 300) when, firstly, the driver actuates the control member (8) manually, and secondly, the said position sensor associated with the said control member (8) emits no signal which is capable of causing, through the computer (40), the motor means (20) to be started.

6. A linkage according to any one of Claims 1 to 5, characterised in that it is associated with a wear sensor (80), for detecting additional pulling movement in the linkage due to wear when the control member (8) is in its free position, in such a way that the said sensor (80) transmits a signal to the computer (40) when such a said strain is present, so as to start the said motor means (20) and displace the movable application point, whereby to cause wear to be taken up.

7. A linkage according to any one of the preceding Claims, characterised in that the position sensor (51, 52) for detecting the free position of the control member (8), is a potentiometer.

8. A linkage according to any one of the preceding Claims, characterised in that the motor means (20) comprise an electric motor with a worm (21), which meshes with worm wheels (31, 32) of an irreversible transmission (30, 300).

9. A linkage according to Claim 7, characterised in that the worm wheels (31, 32) mesh with a rack (34), formed in a sliding member (33) which is movable, axially with respect to a housing (22), in a bore (37) of the said housing (22).

10. A linkage according to Claim 7, characterised in that the worm wheels (31, 32) mesh with a toothed sector (90) which is mounted for pivoting movement with respect to the housing.

11. A linkage according to any one of the preceding Claims, of the kind comprising a cable (1) and a sheath (2), the said cable having two end points (10, 11) and passing through the sheath (2), characterised in that the movable application point (11) is the end point of the cable (1) opposite to that which is associated with the control member (8).

12. A linkage according to any one of the preceding Claims, of the kind including a cable (1) and a sheath (2) interposed between two points carried by a fixed part of the vehicle, with the said cable (1) passing through the said sheath (2), characterised in that the movable application point is one of the points associated with the end of the sheath (2).

13. A linkage according to any one of the preceding Claims, characterised in that the control member is a pedal, and the manoeuvring member is a clutch release bearing (3) which is actuated by a declutching fork (4).
